# EUROPÄISCHE PATENTSCHRIFT

(11) **EP 2 765 018 B1**
(45) Veröffentlichungstag und Bekanntmachung des Hinweises auf die Patenterteilung: **20.03.2019**
(21) Anmeldenummer: 14153331.5
(22) Anmeldetag: 30.01.2014
(51) Int. Cl.: B60K 7/00, B60K 17/04, B60K 17/30, B60K 17/356, B60K 17/34, B60K 17/342, B60K 23/08, F16L 55/32, H02K 7/14, B60L 11/18, E03F 7/12

(54) **Inspektionswagen mit Direktantrieb**
Inspection carriage with direct drive
Chariot d'inspection avec entraînement direct

(30) Priorität: 30.01.2013 DE 102013100957
(43) Veröffentlichungstag der Anmeldung: 13.08.2014
(73) Patentinhaber: iPEK International GmbH, 87477 Sulzberg (DE)
(72) Erfinder: Nadler, Andreas, 87471 Bodelsberg (DE)
(74) Vertreter: 2s-ip Schramm Schneider Bertagnoll Patent- und Rechtsanwälte Part mbB

(56) Entgegenhaltungen:
- CN-A- 101 638 052
- US-A- 5 248 008
- US-A1- 2002 104 693
- US-A1- 2007 276 552
- US-A1- 2008 245 258

## Beschreibung

### Gebiet der Erfindung

Die Erfindung betrifft einen Inspektionswagen für ein Inspektionssystem, insbesondere Kanal- bzw. Rohrinspektionssystem, mit an beiden Gehäuselängsseiten des Inspektionswagens angeordneten Fahrwerksteilen, etwa Räder oder Ketten- bzw. Raupenfahrwerk.

### Hintergrund der Erfindung und Stand der Technik

Für die Inspektion von Kanälen, insbesondere Abwasserkanälen, Schächten, Anschlusskanälen, Grundstücksentwässerungsanlagen, Sickerwasserleitungen oder sonstiger abwassertechnischer Anlagen wird herkömmlicherweise ein selbstfahrender Wagen bzw. Inspektionswagen eingesetzt, der eine Kamera tragen kann und der über ein Kabel oder kabellos von außerhalb des Kanals steuerbar ist. Bekannte Inspektionswagen werden in zu untersuchende Rohrleitungen eingeführt und fahren diese über eine bestimmte Strecke ab. Diese Inspektionswagen weisen hierzu meist Räder oder ein Ketten- bzw. Raupenfahrwerk auf, mit denen eine Bewegung im Kanal bzw. in der Rohrleitung bewerkstelligt wird. Für den Antrieb der Räder bzw. des Ketten- oder Raupenfahrwerks verfügen die bekannten Inspektionswagen in der Regel über einen Antriebsmotor.

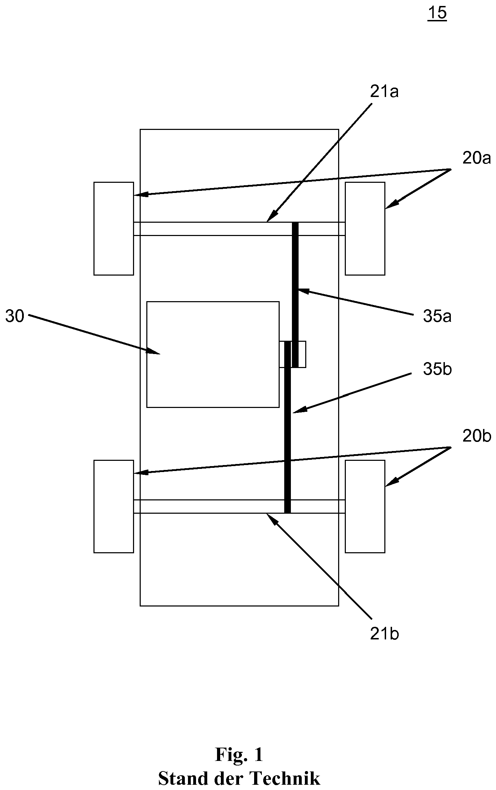

**Fig. 1** zeigt einen aus dem Stand der Technik bekannten Inspektionswagen 15. Der in Fig. 1 gezeigte Inspektionswagen 15 weist ein Gehäuse mit daran angeordneten Vorderrädern 20a und Hinterrädern 20b auf. Die Vorderräder sind hier an einer Vorderachse 21a und die Hinterräder an einer Hinterachse 21b angeordnet.

Der aus dem Stand der Technik bekannte Inspektionswagen 15 weist darüber hinaus einen Antrieb für die Vorder- bzw. Hinterräder auf. Der Antrieb wird hier durch einen Antriebsmotor 30, der als Elektromotor ausgestaltet ist, und zwei Antriebsriemen 35a, 35b gebildet. Die Antriebsriemen 35a, 35b verbinden die Welle des Antriebsmotors 30 mit der Vorderachse 21a bzw. mit der Hinterachse 21b, um die Drehbewegung der Welle auf die Vorderachse 21a bzw. auf die Hinterachse 21b zu übertragen. Anstelle der Antriebsriemen 35a, 35b kann die Drehbewegung der Welle des Antriebsmotors 30 auch über ein Getriebe auf die Vorder- bzw. Hinterachse übertragen werden.

Für die Übertragung von Drehbewegungen und Drehmomenten von dem Antriebsmotor auf die Räder bzw. auf die Radachsen ist es auch bekannt Kegelradgetriebe, Kronenradgetriebe oder Schraubwälzgetriebe, etwa Schneckengetriebe vorzusehen.

Nachteilig bei dem aus dem Stand der Technik bekannten Inspektionswagen 15 ist, dass der Aufbau und die Anordnung der Antriebseinheiten (Antriebsmotor, Getriebeeinheiten, Radachsen) in dem Inspektionswagen verhältnismäßig kompliziert und zudem störanfällig ist. Aufgrund von Wartungsarbeiten an den Antriebseinheiten kann es zu längeren Stillstandzeiten des gesamten Inspektionssystems kommen.

Zudem weisen die aus dem Stand der Technik bekannten Antriebseinheiten in dem Inspektionswagen 15 einen hohen Platzbedarf auf. Dies erhöht zum einen die Größe und zum anderen die Aufbaumaße des Inspektionswagens und kann damit die Flexibilität und Wendigkeit des Inspektionswagens in den meist sehr engen Kanalrohren bzw. Rohrleitungen beeinträchtigen.

Wünschenswert ist es, einen in ein Rohr verbrachten Inspektionswagen mit einer Schnur oder einem Kabel rückwärts wieder aus dem Rohr zu ziehen, da dies meist schneller geht als den Inspektionswagen rückwärts aus der Rohrleitung fahren zu lassen. Hierzu sehen die aus dem Stand der Technik bekannten Inspektionswagen eine mechanische Kupplung vor, um die von dem Antriebsmotor angetriebenen Achsen von dem Antriebsmotor abzukoppeln. Damit kann zwar der Inspektionswagen einfach aus einer Rohrleitung herausgezogen werden. Andererseits erhöht das Vorsehen einer mechanischen Kupplung die Komplexität der gesamten Antriebseinheit und bedeutet zusätzliche Teile, die einem Verschleiß unterliegen können.

Ein Inspektionswagen mit den Merkmalen des Oberbegriffs des Anspruchs 1 ist aus der US 2008/245258 A1 bekannt.

### Aufgabe der Erfindung

Aufgabe der vorliegenden Erfindung ist es daher, die aus dem Stand der Technik bekannten Nachteile zumindest teilweise zu vermeiden und einen Inspektionswagen bereitzustellen, der über einen besonders wartungsarmen Antrieb verfügt und zudem eine besonders kompakte Bauweise des Inspektionswagens ermöglicht.

### Erfindungsgemäße Lösung

Erfindungsgemäß wird diese Aufgabe mit einem Inspektionswagen für ein Inspektionssystem, insbesondere Kanal- bzw. Rohrinspektionssystem, gemäß dem unabhängigen Anspruch gelöst. Vorteilhafte Ausgestaltungen und Weitergestaltungen der Erfindung sind in den abhängigen Ansprüchen angegeben.

Bereitgestellt wird demnach ein Inspektionswagen für ein Inspektionssystem, insbesondere Kanal- bzw. Rohrinspektionssystem, umfassend ein Fahrwerk mit einer Anzahl von Fahrwerksteilen, wobei an beiden Gehäuselängsseiten des Inspektionswagens jeweils zumindest ein Fahrwerksteil angeordnet ist, wobei an jeder Gehäuselängsseite zumindest einem Fahrwerksteil ein elektrischer Radnabenmotor zugeordnet ist und wobei in dem Radnabenmotor ein elektronischer Schalter vorgesehen ist, mit dem der Stator des Radnabenmotors und/oder die Statorspulen des Radnabenmotors vom Stromkreis des Radnabenmotors getrennt werden können.

Jeder Radnabenmotor kann eine Steuereinheit zum Steuern des Radnabenmotors umfassen oder jeder Radnabenmotor kann mit einer zentralen Steuereinheit zum Steuern der Radnabenmotoren gekoppelt sein.

In einer Ausgestaltung der Erfindung sind die Radnabenmotoren unabhängig voneinander steuerbar.

Der Rotor des Radnabenmotors kann mit dem Fahrwerksteil gekoppelt sein und relativ zum Stator des Radnabenmotors rotierbar auf dem Stator gelagert sein.

In einer Ausgestaltung der Erfindung kann der Rotor des Radnabenmotors über eine Getriebeeinheit mit dem Fahrwerksteil gekoppelt sein.

Vorzugsweise ist der Radnabenmotor in einem druckdichten und/oder wasserdichten Gehäuse angeordnet.

Der Radnabenmotor kann als bürstenloser Gleichstrommotor, vorzugsweise als Torquemotor ausgestaltet sein. An einem Motorflansch des Radnabenmotors kann ein Dichtungselement, vorzugsweise ein ringförmiges Dichtungselement angeordnet sein. Vorzugsweise ist das Dichtungselement an der einer Seitenwandung des Inspektionswagens zugewandten Seite des Motorflansches des Radnabenmotors angeordnet.

Die Fahrwerksteile können als Räder ausgestaltet sind oder das Fahrwerk kann als Ketten- oder Raupenfahrwerk ausgebildet sein.

In dem elektrischen Radnabenmotor kann eine Lenkeinrichtung integriert sein, mit der das Fahrwerksteil bzw. das Rad um eine vertikale Achse drehbar bzw. schwenkbar ist.

Die Lenkeinrichtung kann eine vertikal angeordnete Lenkstange umfassen, die am oberen und am unteren Ende über Verbindungselemente drehfest mit dem elektrischen Radnabenmotor, vorzugsweise mit dem Stator oder mit dem Motorflansch des Radnabenmotors, verbunden ist.

Die Lenkstange kann in einer Haltevorrichtung drehbar gelagert sein, wobei die Haltevorrichtung fest mit dem Inspektionswagen verbunden ist. "Drehbar gelagert" bedeutet, dass die Lenkstange um ihre Längsachse in der Haltevorrichtung gedreht werden kann.

An der Haltevorrichtung kann eine Stelleinrichtung, vorzugsweise ein Stellmotor, angeordnet sein, der mit der Lenkstange zusammenwirkt, um ein Drehen der Lenkstange um dessen Längsachse zu bewirken.

Zwischen der Haltevorrichtung und dem oberen Verbindungselement und/oder dem unteren Verbindungselement kann eine Dämpfungsfeder angeordnet sein.

Durch das Vorsehen eines elektrischen Radnabenmotors an den Fahrwerksteilen, etwa an den Rädern und/oder Ketten- bzw. Raupenfahrwerk, ist einerseits eine besonders kompakte Bauweise eines Inspektionswagens möglich. Anderseits unterliegen die Antriebseinheiten nahezu keinem Verschleiß, sodass Wartungsarbeiten an dem Inspektionswagen deutlich reduziert werden können.

### Kurzbeschreibung der Figuren

Weitere Einzelheiten und Merkmale der Erfindung sowie konkrete, insbesondere vorteilhafte, Ausführungsbeispiele der Erfindung ergeben sich aus der nachfolgenden Beschreibung in Verbindung mit der Zeichnung. Es zeigt:
- Fig. 1: eine schematische Darstellung eines aus dem Stand der Technik bekannten Inspektionswagens;
- Fig. 2: eine schematische Darstellung eines erfindungsgemäßen Inspektionswagens;
- Fig. 3: eine Detailansicht eines erfindungsgemäßen Radnabenmotors im Querschnitt;
- Fig. 4: eine Detailansicht einer alternativen Ausgestaltung eines erfindungsgemäßen Radnabenmotors im Querschnitt;
- Fig. 5: den in Fig. 4 gezeigten Radnabenmotor mit einem an dem Motorflansch angeordneten Dichtungselement;
- Fig. 6a: einen erfindungsgemäßen Inspektionswagen mit eingeschlagenen Rädern; und
- Fig. 6b: eine Ausgestaltung einer Lenkeinrichtung für einen Radnabenmotor eines erfindungsgemäßen Inspektionswagen.

### Detaillierte Beschreibung der Erfindung

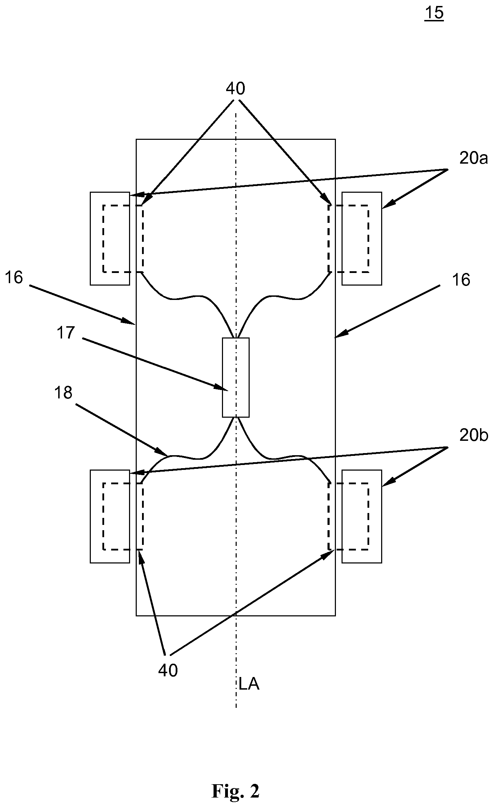

**Fig. 2** zeigt eine schematische Darstellung eines erfindungsgemäßen Inspektionswagens 15, der beispielsweise als Kamerawagen zur Inspektion von Kanal- bzw. Rohrleitungen ausgestaltet sein kann. Eine Kamera kann in an sich bekannter Weise an einer Hebeeinheit des Kamerawagens angeordnet sein. Ferner können an dem Kamerawagen eine Anzahl von Sensoren vorgesehen sein, etwa Temperatursensoren, Abstandssensoren, oder dergleichen.

Bei der in Fig. 2 gezeigten Darstellung des erfindungsgemäßen Inspektionswagens sind nur die für die vorliegende Erfindung wesentlichen Elemente gezeigt.

An den beiden Längsseiten bzw. Seitenwandungen 16 des Inspektionswagens 15 sind hier jeweils zwei Räder (zwei Vorderräder 20a und zwei Hinterräder 20b) angeordnet. Die Räder werden vorzugsweise getrennt und unabhängig voneinander angetrieben, um eine größtmögliche Manövrierfähigkeit zu erreichen.

Jedem der Räder 20a, 20b ist hier ein Radnabenmotor 40 zugeordnet, der direkt in ein Rad 20a, 20b eingebaut ist und gleichzeitig die Radnabe trägt. Ein Teil des Radnabenmotors 40 überträgt das erzeugte Drehmoment auf das Rad 20a, 20b. Über einen Flansch kann der elektrische Radnabenmotor 40 an der Seitenwandung 16 des Inspektionswagens 15 vorzugsweise lösbar befestigt werden. Vorteilhaft ist hierbei, dass ein zentraler Antriebsmotor 30 entfällt und damit auf einen klassischen Antriebsstrang mit den je nach Ausprägung notwendigen Komponenten (Getriebe, Differenzialgetriebe, Antriebswellen) verzichtet werden kann. Dadurch wird eine sehr kompakte und platzsparende Bauweise des Inspektionswagens 15 möglich. Durch den Wegfall des klassischen Antriebsstranges fallen auch dessen Übertragungsverluste weg, sodass der Wirkungsgrad des erfindungsgemäßen Antriebssystems mit in den Rädern 20a, 20b angeordneten Radnabenmotoren 40 deutlich erhöht werden kann. Der Wegfall des klassischen Antriebsstranges hat zudem den Vorteil, dass das gesamte Inspektionssystem deutlich wartungsfreundlicher ist.

Mit den Radnabenmotoren 40 können sämtliche Räder 20a, 20b getrennt und unabhängig voneinander angetrieben werden. Ferner können die einzelnen Räder 20a, 20b in einer unterschiedlichen Drehrichtung angetrieben werden. Beispielsweise können die linken Räder vorwärts und die rechten Räder rückwärts angetrieben werden, was eine besonders gute Manövrierfähigkeit des Inspektionswagens 15 gewährleistet und bei Bedarf auch ein Wenden des Inspektionswagens 15 auf der Stelle ermöglicht. Dadurch kann auch besonders einfach in Rohrabzweigungen eingebogen oder um enge Rohrkrümmungen herumgefahren werden.

Bei der in Fig. 2 gezeigten Ausgestaltung eines erfindungsgemäßen Inspektionswagens ist an bzw. in dem Inspektionswagen 15 eine Stromversorgung 17, etwa ein Akkumulator, und/oder eine Steuereinrichtung vorgesehen. Die Stromversorgung und/oder Steuereinrichtung 17 ist über Verbindungskabel 18 mit den Radnabenmotoren 40 gekoppelt, um die Radnabenmotoren mit Energie zu versorgen und/oder Steuerbefehle an eine Elektronik der Radnabenmotoren zu übertragen.

In einer alternativen Ausgestaltung der Erfindung kann an dem Inspektionswagen auch ein Kabel angeordnet sein, welches aus dem Kanal bzw. aus der Rohrleitung herausgeführt wird und über welches der Inspektionswagen 15 mit elektrischer Energie versorgt wird und/oder über welches Steuerdaten, insbesondere zur Steuerung der Radnabenmotoren an den Inspektionswagen 15 übermittelt werden.

Bei der in Fig. 2 gezeigten erfindungsgemäßen Ausgestaltung eines Inspektionswagens 15 ist jedem der vier Räder 20a, 20b ein Radnabenmotor 40 zugeordnet. In einer alternativen Ausgestaltung kann es vorgesehen sein, dass lediglich zwei Rädern, beispielsweise nur den Vorderrädern 20a oder nur den Hinterrädern 20b, jeweils ein Radnabenmotor zugeordnet ist. Ferner können auch mehr als die vier in Fig. 2 gezeigten Räder vorgesehen sein, wobei auch mehr als vier Rädern ein Radnabenmotor zugeordnet sein kann bzw. mehr als vier Räder mit einem Radnabenmotor angetrieben werden können. Alternativ kann das Fahrwerk des erfindungsgemäßen Inspektionswagens 15 auch als Ketten- oder Raupenfahrwerk ausgestaltet sein, wobei der Radnabenmotor direkt in die Laufrolle integriert sein kann.

In einer Ausgestaltung der Erfindung kann ein Lenken des Inspektionswagens 15 durch unterschiedliche Drehgeschwindigkeiten der rechten und der linken Räder bewerkstelligt werden, was erfindungsgemäß dadurch ermöglicht wird, dass die einzelnen Räder über die ihnen zugeordneten Radnabenmotoren 40 einzeln und unabhängig voneinander angetrieben werden können.

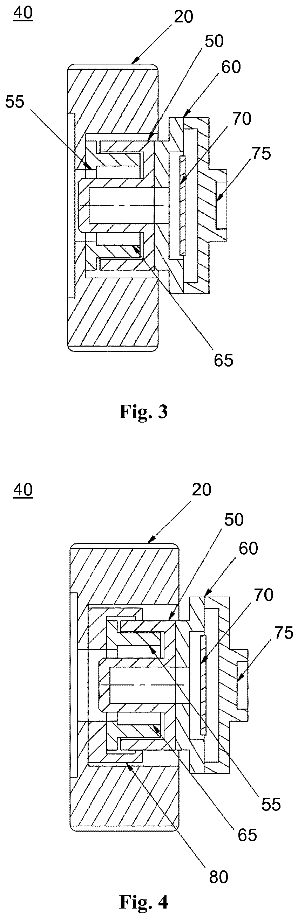

**Fig. 3** zeigt einen Radnabenmotor 40 für einen erfindungsgemäßen Inspektionswagen in einer ersten Ausführungsform.

Der elektrische Radnabenmotor 40 ist in einem Rad 20 angeordnet. Der Rotor 55 des Radnabenmotors 40 ist mit dem Rad 20 gekoppelt und relativ zum Stator 50 des Radnabenmotors rotierbar auf dem Stator gelagert. Zwischen dem Rotor 55 und dem Stator 50 bzw. der Nabe ist vorzugsweise ein Lager 65 angeordnet. Der Radnabenmotor weist einen Motorflansch 60 auf, der in der hier gezeigten Ausführungsform mit dem Stator 50 verbunden ist. Der Flansch 60 bildet zusammen mit einer Abdeckung einen Hohlraum, in dem die Elektronik 70 des Radnabenmotors untergebracht ist. Die Abdeckung weist einen Stecker bzw. Steckereinheit 75 auf, über den die Elektronik 70 des Radnabenmotors mit Energie bzw. Steuerdaten versorgt werden kann.

Vorzugsweise handelt es sich bei dem in Fig. 3 gezeigten Radnabenmotor und bei den nachfolgenden beschriebenen Radnabenmotoren um einen bürstenlosen Gleichstrommotor (bürstenloser Radnabenmotor). Als besonders vorteilhaft hat sich ein Torquemotor als bürstenloser Radnabenmotor erwiesen, der sehr hohe Drehmomente bei relativ kleinen Drehzahlen ermöglicht und nahezu keinem Verschleiß unterliegt.

**Fig. 4** zeigt eine alternative Ausgestaltung eines Radnabenmotors 40 für einen erfindungsgemäßen Inspektionswagen 15.

Der in Fig. 4 gezeigte Radnabenmotor entspricht im Wesentlichen dem in Fig. 3 gezeigten Radnabenmotor. Zusätzlich zu dem in Fig. 3 gezeigten Radnabenmotor ist bei dem in Fig. 4 gezeigten Radnabenmotor 40 zwischen dem Rotor 55 und dem Rad 20 ein Getriebe bzw. eine Getriebeeinheit 80 angeordnet. Damit kann das Drehmoment am Rad 20 erhöht werden. Der übrige Aufbau des in Fig. 4 gezeigten Radnabenmotors entspricht dem in Fig. 3 gezeigten Radnabenmotor.

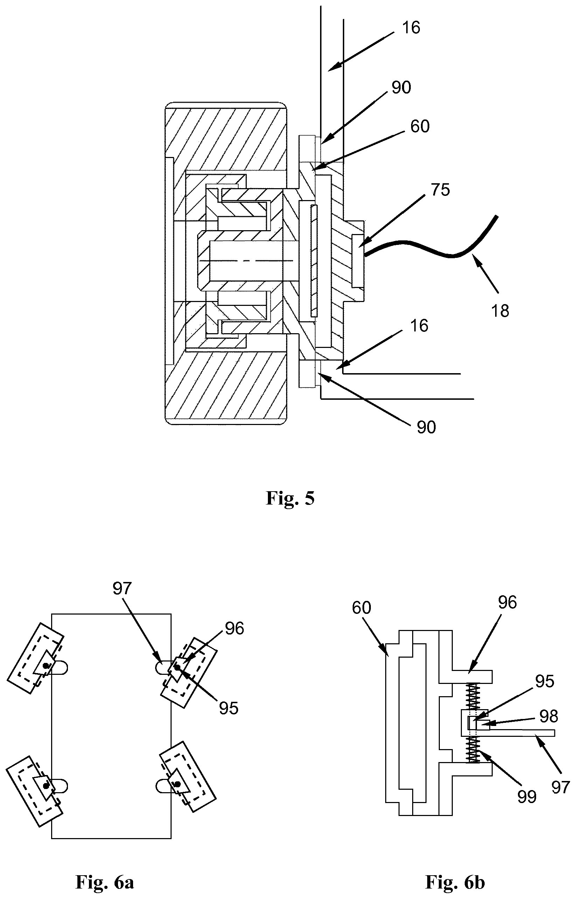

**Fig. 5** zeigt eine weitere Ausgestaltung eines elektrischen Radnabenmotors für einen erfindungsgemäßen Inspektionswagen 15.

Der Aufbau des Radnabenmotors entspricht dem in Fig. 4 gezeigten Radnabenmotor mit einem zwischen dem Rotor 55 und dem Rad 20 angeordneten Getriebe 80. Der Motorflansch 60 weist hier einen etwas größeren Durchmesser auf, als der Motorflansch des in Fig. 4 gezeigten Radnabenmotors. Über den Motorflansch 60 kann das gesamte Fahrwerksteil, d.h. das Rad mit dem daran bzw. darin angeordneten Radnabenmotor vorzugsweise lösbar an dem Gehäuse bzw. an der Seitenwandung des Inspektionswagens angebracht werden, was beispielsweise mittels einer Schraubverbindung bewerkstelligbar ist. An der der Seitenwandung 16 des Inspektionswagens 15 zugewandten Seite des Motorflansches 60 ist ein Dichtungselement 90 vorgesehen, um den Innenraum des Inspektionswagens zuverlässig vor Schmutz und Feuchtigkeit zu schützen. Das Dichtungselement 90 kann als ringförmiges Dichtungselement, beispielsweise als Gummiring (O-Ring) ausgestaltet sein.

An dem Stecker bzw. an der Steckereinheit 75 ist ein elektrisches Kabel 18 herangeführt, über welches die Elektronik 70 mit elektrischer Energie und/oder mit Steuerdaten versorgt wird. Die Steckereinheit 75 ist vorzugsweise als lösbare Steckereinheit ausgestaltet, um das Verbindungskabel 18 von dem Radnabenmotor 40 trennen zu können. Das Rad 20 und der darin angeordnete Radnabenmotor 40 kann so zusammen mit der Elektronik 70 des Radnabenmotors als einzelne Baugruppe bereitgestellt werden und besonders einfach an dem Inspektionswagen befestigt werden, indem lediglich das Verbindungskabel 18 auf die Steckereinheit 75 aufgesteckt werden muss und anschließend die Baugruppe über den Motorflansch 60 an der Seitenwandung des Inspektionswagens befestigt werden muss. Dadurch kann bei Bedarf eine einzelne Baugruppe besonders einfach und besonders schnell ausgewechselt werden, was Stillstandzeiten erheblich verringern kann.
Die vorstehend gezeigten erfindungsgemäßen Radnabenmotoren können in einem druckdichten und/oder wasserdichten Gehäuse angeordnet sein, was insbesondere dann vorteilhaft ist, wenn der erfindungsgemäße Inspektionswagen in wasserführenden bzw. feuchten Kanal- bzw. Rohrleitungen zum Einsatz kommt.

Ferner ist bei den vorstehend gezeigten erfindungsgemäßen Radnabenmotoren ein elektrischer bzw. elektronischer Schalter vorgesehen, mit dem der Stator 50 bzw. die Statorspulen vom restlichen Stromkreis des Radnabenmotors getrennt werden können. Dies ist insbesondere dann vorteilhaft, wenn der Inspektionswagen rückwärts aus dem Kanal bzw. aus der Rohrleitung herausgezogen werden soll. Denn dadurch wird verhindert, dass beim Herausziehen durch die Drehbewegung des Rotors der Radnabenmotor als Generator wirkt und der Radnabenmotor aufgrund der Eigeninduktion als Bremse wirkt.
Des Weiteren kann bei den vorstehend gezeigten erfindungsgemäßen Inspektionswagen in jedem Rad bzw. in jedem Radnabenmotor eine Lenkung integriert sein, beispielsweise in Form eines Stellmotors, mit dem das Rad um eine vertikale Achse gedreht werden kann. Damit ist es einerseits möglich, die Räder getrennt und unabhängig voneinander zu lenken bzw. einzuschlagen. Andererseits kann in dem Inspektionswagen auf ein Lenkgetriebe und Spurstangen verzichtet werden, sodass in dem Inspektionswagen noch mehr Platz für Messeinrichtungen zur Verfügung steht oder der Inspektionswagen noch kompakter ausgeführt werden kann. Eine derartige Lenkung kann in allen Rädern oder nur in einigen Rädern, etwa in den Vorderrädern 20a oder in den Hinterrädern 20b, vorgesehen sein. Ferner kann eine solche Lenkung auch in den Rädern vorgesehen sein, die nicht mittels eines elektrischen Radnabenmotors angetrieben werden.

**Fig. 6a** zeigt eine schematische Ansicht eines erfindungsgemäßen Inspektionswagens, bei dem sämtliche mittels eines Radnabenmotors angetriebenen Räder über eine integrierte Lenkeinrichtung lenkbar sind. Bei den in Fig. 6 gezeigten Einschlägen der Räder bzw. Einschlagwinkeln sind besonders kleine Kurvenradien des Inspektionswagens möglich, sodass mit dem Inspektionswagen besonders einfach in Rohrabzweigungen abgebogen werden kann bzw. besonders einfach um enge Rohrkrümmungen herumgefahren werden kann. Weil auf ein Lenkgetriebe, Spurstangen und Querlenker verzichtet werden kann, sind zudem besonders große Einschlagwinkel der Räder möglich.

Eine Detailansicht einer Lenkeinrichtung für den erfindungsgemäßen Radnabenmotor ist in **Fig. 6b** gezeigt.

Die Lenkeinrichtung umfasst im Wesentlichen eine vertikal angeordnete Lenkstange 95, die am oberen und am unteren Ende über jeweils ein Verbindungselement 96 drehfest mit dem Radnabenmotor, vorzugsweise mit dem Stator 50 oder mit dem Motorflansch 60 des Radnabenmotors, verbunden ist. Durch die drehfeste Verbindung der Lenkstange 95 mit dem Radnabenmotor wird der Radnabenmotor bei einer Drehung der Lenkstange um die Längsachse der Lenkstange auch der Radnabenmotor um die Längsachse der Lenkstange gedreht bzw. geschwenkt.

Die Lenkstange 95 ist in einer Haltevorrichtung 97, die fest mit dem Inspektionswagen verbunden ist, drehbar gelagert. Die Lenkstange 95 ist drehbar um ihre Längsachse in der Haltevorrichtung 97 gelagert. Die Haltevorrichtung ist zumindest teilweise zwischen den dem oberen und dem unteren Verbindungselement 96 angeordnet.

An der Haltevorrichtung 97 ist eine Stelleinrichtung, etwa ein Stellmotor 98 angeordnet, der mit der Lenkstange 95 zusammenwirkt, um ein Drehen der Lenkstange 95 um dessen Längsachse zu bewirken. Zwischen der Haltevorrichtung 97 und dem oberen Verbindungselement bzw. dem unteren Verbindungselement kann jeweils eine Dämpfungsfeder 99 angeordnet sein.

Der erfindungsgemäße Inspektionswagen zeichnet sich insbesondere dadurch aus, dass für den Antrieb weniger mechanische Komponenten vorgesehen werden müssen, was zu einem robusteren, kompakteren und weniger störanfälligen Inspektionswagen führt. Durch den Direktantrieb der Räder kann zudem der Wirkungsgrad des Antriebes wesentlich erhöht werden. Ferner wird die Wartung des Inspektionswagens erheblich vereinfacht, weil die Anzahl der mechanischen Antriebskomponenten erheblich reduziert ist. Der Aufbau des restlichen Inspektionswagens wird dadurch ferner wesentlich vereinfacht. Ein wesentlicher Vorteil liegt auch darin, dass die Manövrierfähigkeit des Inspektionswagens wesentlich verbessert wird. Weil sämtliche angetriebenen Räder unabhängig und getrennt voneinander angetrieben werden können, kann auf besonders einfache Art und Weise auch eine Antischlupfregelung realisiert werden.

### Bezugszeichen:

- 15: Inspektionswagen, z.B. Kamerawagen
- 16: Längsseiten (Seitenwandung) des Inspektionswagen
- 17: Stromversorgung (z.B. Akkumulator) und/oder Steuereinrichtung
- 18: Verbindungskabel
- 20: Rad eines Inspektionswagens
- 20a: Vorderräder eines Inspektionswagens
- 20b: Hinterräder eines Inspektionswagens
- 21a: Vorderachse
- 21b: Hinterachse
- 30: Antriebsmotor
- 35a, 35b: Antriebsriemen
- 40: Radnabenmotoren
- 50: Stator des Radnabenmotors
- 55: Rotor des Radnabenmotors
- 60: Motorflansch des Radnabenmotors
- 65: Lager des Radnabenmotors
- 70: Elektronik des Radnabenmotors
- 75: Stecker bzw. Steckereinheit des Radnabenmotors
- 80: Getriebe bzw. Getriebeeinheit
- 90: Dichtungselement, z.B. Gummiring
- 95: Lenkstange
- 96: Verbindungselement
- 97: Halterung
- 98: Stellmotor
- 99: Dämpfungsfeder
- LA: Längsachse des Inspektionswagens

## Patentansprüche

1. Inspektionswagen (15) für ein Inspektionssystem, insbesondere Kanal- bzw. Rohrinspektionssystem, umfassend ein Fahrwerk mit einer Anzahl von Fahrwerksteilen (20), wobei an beiden Gehäuselängsseiten (16) des Inspektionswagens jeweils zumindest ein Fahrwerksteil angeordnet ist, wobei an jeder Gehäuselängsseite (16) zumindest einem Fahrwerksteil ein elektrischer Radnabenmotor (40) zugeordnet ist, **dadurch gekennzeichnet, dass** in dem Radnabenmotor (40) ein elektronischer Schalter vorgesehen ist, mit dem der Stator (50) des Radnabenmotors (40) und/oder die Statorspulen des Radnabenmotors (40) vom Stromkreis des Radnabenmotors (40) getrennt werden können.

2. Inspektionswagen nach Anspruch 1, **dadurch gekennzeichnet, dass** jeder Radnabenmotor (40) eine Steuereinheit zum Steuern des Radnabenmotors umfasst oder dass jeder Radnabenmotor (40) mit einer zentralen Steuereinheit zum Steuern der Radnabenmotoren gekoppelt ist.

3. Inspektionswagen nach einem der vorhergehenden Ansprüche, **dadurch gekennzeichnet**, die Radnabenmotoren (40) unabhängig voneinander steuerbar sind.

4. Inspektionswagen nach einem der vorhergehenden Ansprüche, **dadurch gekennzeichnet, dass** der Rotor (55) des Radnabenmotors (40) mit dem Fahrwerksteil (20) gekoppelt ist und relativ zum Stator (50) des Radnabenmotors (40) rotierbar auf dem Stator gelagert ist.

5. Inspektionswagen nach Anspruch 4, **dadurch gekennzeichnet, dass** der Rotor (55) des Radnabenmotors (40) über eine Getriebeeinheit (80) mit dem Fahrwerksteil (20) gekoppelt ist.

6. Inspektionswagen nach einem der vorhergehenden Ansprüche, **dadurch gekennzeichnet, dass** der Radnabenmotor (40) in einem druckdichten und/oder wasserdichten Gehäuse angeordnet ist.

7. Inspektionswagen nach einem der vorhergehenden Ansprüche, **dadurch gekennzeichnet, dass** der Radnabenmotor (40) als bürstenloser Gleichstrommotor, vorzugsweise als Torquemotor ausgestaltet ist.

8. Inspektionswagen nach einem der vorhergehenden Ansprüche, **dadurch gekennzeichnet, dass** an der einer Seitenwandung des Inspektionswagens (15) zugewandten Seite eines Motorflansches (60) des Radnabenmotors (40) ein Dichtungselement (90), vorzugsweise ein ringförmiges Dichtungselement angeordnet ist.

9. Inspektionswagen nach einem der vorhergehenden Ansprüche, **dadurch gekennzeichnet, dass** die Fahrwerksteile (20) als Räder ausgestaltet sind oder dass das Fahrwerk als Ketten- oder Raupenfahrwerk ausgebildet ist.

10. Inspektionswagen nach einem der vorhergehenden Ansprüche, **dadurch gekennzeichnet, dass** in dem elektrischen Radnabenmotor (40) eine Lenkeinrichtung integriert ist, mit der das Fahrwerksteil (20) um eine vertikale Achse drehbar ist.

11. Inspektionswagen nach dem vorhergehenden Anspruch, **dadurch gekennzeichnet, dass** die Lenkeinrichtung eine vertikal angeordnete Lenkstange (95) umfasst, die am oberen und am unteren Ende über Verbindungselemente (96) drehfest mit dem elektrischen Radnabenmotor (40), vorzugsweise mit dem Stator (50) oder mit dem Motorflansch (60) des Radnabenmotors, verbunden ist.

12. Inspektionswagen nach dem vorhergehenden Anspruch, **dadurch gekennzeichnet, dass** die Lenkstange (95) in einer Haltevorrichtung (97) drehbar gelagert ist, wobei die Haltevorrichtung fest mit dem Inspektionswagen verbunden ist.

13. Inspektionswagen nach dem vorhergehenden Anspruch, **dadurch gekennzeichnet, dass** an der Haltevorrichtung (97) eine Stelleinrichtung (98), vorzugsweise ein Stellmotor, angeordnet ist, der mit der Lenkstange (95) zusammenwirkt, um ein Drehen der Lenkstange um dessen Längsachse zu bewirken.

14. Inspektionswagen nach einem der beiden vorhergehenden Ansprüche, **dadurch gekennzeichnet, dass** zwischen der Haltevorrichtung (97) und dem oberen Verbindungselement und/oder dem unteren Verbindungselement eine Dämpfungsfeder (99) angeordnet ist.

## Claims

1. An inspection crawler (15) for an inspection system, in particular a sewer and tubing inspection system, comprising a running gear having a number of running gear parts (20), wherein the two housing longitudinal sides (16) of the inspection crawler have each at least one running gear part arranged thereon, wherein on each housing longitudinal side (16), an electric wheel hub motor (40) is associated with at least one running gear part, **characterised in that** the wheel hub motor (40) has an electronic switch provided therein by means of which the stator (50) of the wheel hub motor (40) and/or the stator coils of the wheel hub motor (40) may be disconnected from the electric circuit of the wheel hub motor (40).

2. The inspection crawler as claimed in claim 1, **characterised in that** each wheel hub motor (40) comprises a control unit for controlling the wheel hub motor or **in that** each wheel hub motor (40) is coupled to a central control unit designed for controlling the wheel hub motors.

3. The inspection crawler as claimed in any of the preceding claims, **characterised in that** the wheel hub motors (40) may be controlled independently from one another.

4. The inspection crawler as claimed in any of the preceding claims, **characterised in that** the rotor (55) of the wheel hub motor (40) is coupled to the running gear part (20) and is mounted on the stator in a manner so as to rotate with respect to the stator (50) of the wheel hub motor (40).

5. The inspection crawler as claimed in claim 4, **characterised in that** the rotor (55) of the wheel hub motor (40) is coupled to the running gear part (20) via a transmission unit (80).

6. The inspection crawler as claimed in any of the preceding claims, **characterised in that** the wheel hub motor (40) is arranged within a pressure-tight and/or watertight housing.

7. The inspection crawler as claimed in any of the preceding claims, **characterised in that** the wheel hub motor (40) is realised in the form of a brushless direct current motor, preferably in the form of a torque motor.

8. The inspection crawler as claimed in any of the preceding claims, **characterised in that** the side of a motor flange (60) of the wheel hub motor (40) which faces a lateral wall of the inspection crawler (15) has a sealing member (90), preferably an annular sealing member, disposed thereon.

9. The inspection crawler as claimed in any of the preceding claims, **characterised in that** the running gear parts (20) are realised in the form of wheels or **in that** the running gear is realised as a tracklaying running gear or a caterpillar-type running gear.

10. The inspection crawler as claimed in any of the preceding claims, **characterised in that** the electric wheel hub motor (40) has a steering device integrated therein by means of which the running gear part (20) may rotate about a vertical axis.

11. The inspection crawler as claimed in the preceding claim, **characterised in that** the steering device comprises a vertically arranged steering rod (95) which, by means of connecting elements (96) provided on its upper and lower ends, is connected to rotate with the electric wheel hub motor (40), preferably with the stator (50) or with the motor flange (60) of said wheel hub motor.

12. The inspection crawler as claimed in the preceding claim, **characterised in that** the steering rod (95) is rotatably mounted within a holding device (97), said holding device being fixedly connected to the inspection crawler.

13. The inspection crawler as claimed in the preceding claim, **characterised in that** the holding device (97) has an actuating device (98), preferably a servomotor, arranged thereon which interacts with the steering rod (95) to cause said steering rod to rotate about its longitudinal axis.

14. The inspection crawler as claimed in any of the two preceding claims, **characterised in that** an absorption spring (99) is arranged between the holding device (97) and the upper and/or the lower connecting element(s).

## Revendications

1. Chariot d'inspection (15) pour un système d'inspection, en particulier un système d'inspection de canalisations et de conduits, comprenant un train de roulement pourvu d'une pluralité d'éléments de train de roulement (20), au moins un élément de train de roulement étant disposé respectivement sur les deux côtés longitudinaux de carter (16), un moteur électrique de moyeu de roue (40) étant affecté, sur chaque côté longitudinal de carter (16), à au moins un élément de train de roulement, **caractérisé en ce que** dans le moteur de moyeu de roue (40) est prévu un commutateur électronique grâce auquel il est possible de couper du circuit de courant du moteur de moyeu de roue (40) le stator (50) du moteur de moyeu de roue (40) et/ou les bobines statoriques du moteur de moyeu de roue (40).

2. Chariot d'inspection selon la revendication 1, **caractérisé en ce que** chaque moteur de moyeu de roue (40) comprend une unité de commande permettant de commander le moteur de moyeu de roue ou **en ce que** chaque moteur de moyeu de roue (40) est couplé à une unité de commande centrale permettant de commander lesdits moteurs de moyeu de roue.

3. Chariot d'inspection selon l'une quelconque des revendications précédentes, **caractérisé en ce que** les moteurs de moyeu de roue (40) peuvent être commandés indépendamment les uns des autres.

4. Chariot d'inspection selon l'une quelconque des revendications précédentes, **caractérisé en ce que** le rotor (55) du moteur de moyeu de roue (40) est couplé à l'élément de train de roulement (20) et est logé sur le stator de manière à pouvoir tourner par rapport au stator (50) du moteur de moyeu de roue (40).

5. Chariot d'inspection selon la revendication 4, **caractérisé en ce que** le rotor (55) du moteur de moyeu de roue (40) est couplé à l'élément de train de roulement (20) grâce à une unité de transmission (80).

6. Chariot d'inspection selon l'une quelconque des revendications précédentes, **caractérisé en ce que** le moteur de moyeu de roue (40) est disposé dans un carter étanche à la pression et/ou étanche à l'eau.

7. Chariot d'inspection selon l'une quelconque des revendications précédentes, **caractérisé en ce que** le moteur de moyeu de roue (40) est réalisé en tant que moteur à courant continu sans balais, de préférence en tant que moteur couple.

8. Chariot d'inspection selon l'une quelconque des revendications précédentes, **caractérisé en ce qu'**un élément d'étanchéité (90), de préférence un élément d'étanchéité annulaire, est disposé sur la face d'une bride de moteur (60) du moteur de moyeu de roue (40) qui est tournée vers une paroi latérale du chariot d'inspection (15).

9. Chariot d'inspection selon l'une quelconque des revendications précédentes, **caractérisé en ce que** les éléments de train de roulement (20) sont réalisés en tant que roues ou **en ce que** le train de roulement est réalisé en tant que train de chaîne ou de chenille.

10. Chariot d'inspection selon l'une quelconque des revendications précédentes, **caractérisé en ce que** dans le moteur électrique de moyeu de roue (40) est intégré un dispositif de guidage grâce auquel l'élément de train de roulement (20) peut tourner autour d'un axe vertical.

11. Chariot d'inspection selon la revendication précédente, **caractérisé en ce que** le dispositif de guidage comprend une tige de guidage (95) laquelle est disposée verticalement et est, à l'extrémité supérieure et à l'extrémité inférieure, reliée par des éléments de liaison (96) au moteur électrique de moyeu de roue (40), de préférence au stator (50) ou à la bride de moteur (60) du moteur de moyeu de roue, de manière à être solidaire en rotation avec ce dernier.

12. Chariot d'inspection selon la revendication précédente, **caractérisé en ce que** la tige de guidage (95) est logée dans un dispositif de retenue (97) de manière à pouvoir tourner, ledit dispositif de retenue étant relié de manière fixe au chariot d'inspection.

13. Chariot d'inspection selon la revendication précédente, **caractérisé en ce que** sur le dispositif de retenue (97) est disposé un dispositif de réglage (98), de préférence un servomoteur, lequel coopère avec la tige de guidage (95) afin de faire tourner ladite tige de guidage autour de son axe longitudinal.

14. Chariot d'inspection selon l'une des deux revendications précédentes, **caractérisé en ce qu'**un ressort amortisseur (99) est disposé entre le dispositif de retenue (97) et l'élément de liaison supérieur et/ou l'élément de liaison inférieur.
